(19) Europäisches Patentamt
European Patent Office
Office européen des brevets

(11) **EP 1 257 069 B1**

(12) **EUROPEAN PATENT SPECIFICATION**

(45) Date of publication and mention
of the grant of the patent:
**16.11.2011 Bulletin 2011/46**

(51) Int Cl.:
*H04B 7/005* (2006.01) *H04B 7/06* (2006.01)

(21) Application number: **02253164.4**

(22) Date of filing: **07.05.2002**

(54) **Radio communication apparatus having more channel capacity and less feedback information, and method therefor**

Funkkommunikationsgerät mit mehr Kanalkapazität und weniger Rückkopplungsinformation, und Verfahren dafür

Appareil de radio communication ayant plus de capacité canal et moins d'information de retour, et procédé associé

(84) Designated Contracting States:
**DE FI FR GB**

(30) Priority: **07.05.2001 KR 2001024705**

(43) Date of publication of application:
**13.11.2002 Bulletin 2002/46**

(73) Proprietors:
- **SAMSUNG ELECTRONICS CO., LTD.**
  **Suwon-City, Kyungki-do (KR)**
- **Lee, Kwang-bok**
  **Gwanak-gu,**
  **Seoul (KR)**

(72) Inventors:
- **Kim, Ki-ho**
  **c/o Samsung Adv.Inst.of Technology**
  **ÿongin-city, Kyungki-do, 449-712 (KR)**
- **Kim, Sung-jin,**
  **1048-2 Youngtong-dong**
  **Paldal-gu,**
  **Suwon-city,**
  **Kyungki-do (KR)**
- **Lee, Kwang-bok**
  **Gwanak-gu,**
  **Seoul (KR)**
- **Hwang, Kyu-jong**
  **Seo-gu,**
  **Daejeon (KR)**

(74) Representative: **Greene, Simon Kenneth et al**
**Elkington and Fife LLP**
**Prospect House**
**8 Pembroke Road**
**Sevenoaks**
**Kent TN13 1XR (GB)**

(56) References cited:
**EP-A- 0 973 283** **EP-A- 1 207 645**
**WO-A-00/72464**

**Description**

The present invention relates to radio communication using a multiple-receiving/transmitting antenna, and more particularly, to a radio communication apparatus and method for allocating transmission power so as to maximize the channel capacity.

Channel response information between a transmitter and a receiver should be known to the transmitter and the receiver to detect the optimum channel capacity in radio communication. However, in general, it is assumed that the receiver knows channel response information, whereas the transmitter cannot know channel response information. Thus, channel response information must be fed back to the transmitter from the receiver. Here, 'channel response information' referred in radio communication using multiple antennae is information regarding the channel response between each transmitting antenna and each receiving antenna. The channel response information increases in proportion to the number of transmitting/receiving antennae. Therefore, the channel capacity of a radio communication apparatus using multiple antennae is increased in proportion to the number of antennae used. However, in this case, the amount of information to be fed back to the transmitter is also increased in proportion to the number of antennae.

Conventionally, allocation of transmission power is performed in a radio communication apparatus by an equal power allocation method and a water-filling power allocation method.

In the equal power allocation method, transmission power is allocated equally to base-band signals of transmitting antennae when channel response information is not fed back from a receiver to a transmitter. With this method, the channel capacity $C_{eq}$ of a conventional radio communication apparatus can be calculated by the following equation, referring to techniques introduced by G.J. Foschini and J. Gans ["On Limits of Wireless Communication in a Fading Environment When Using Multiple Antennae", Wireless Personal Comm., pp. 311- 335, March of 1998]:

$$C_{eq} = \log_2 \det[I'_{n'_R} + \frac{P'_T}{n'_T \sigma'^2_N} H' H'^h]$$

$$.... (1)$$

wherein I' denotes an identify matrix, $n'_T$ denotes the number of - transmitting antennae, $n'_R$ denotes the number of - receiving antennae, $P'_T$ denotes the total amount of power available by the transmitting antennae, H' denotes a channel response matrix having a size of $n'_R$ x $n'_T$, $\sigma'^2_N$ denotes the dispersion of received Gaussian noise, det denotes a determinant, and $H'^h$ denotes the conjugate transpose matrix of H'.

The equal power allocation method is advantageous in that channel response information need not be fed back from a receiver to a transmitter, but the equal power allocation method makes the channel capacity to be less than in a radio communication method that feeds back channel response information from a receiver to a transmitter.

Meanwhile, in case that all channel response information is estimated by a receiver and then is fed back to a transmitter from the receiver, in the water-filling power allocation method, the transmitter allocates transmission power to base-band signals using the limited total power with maximizing the channel capacity. In this method, a conventional radio communication apparatus having multi-input and multi-output is converted into a radio communication apparatus having several parallel single inputs and single outputs, by decoupling conversion for completely canceling interference between signals, referring to the paper introduced by D. Shiu, G. Foschini, J. Gans and J. Kahn ["Fading Correlation and Its Effect on the Capacity of Multi-Element Antenna Systems", IEEE Trans. Communications, vol. 48, pp. 502 - 513, March of 2000]. In the decoupling conversion, a V matrix in the transmitter and a $U^h$ matrix in the receiver are used to diagonalize the channel response matrix H' through single value decomposition, using the following equation:

$$UDV^h \quad H' = UDVh \qquad .... (2)$$

A water-filling power allocation method for maximizing channel capacity is disclosed in a book entitled *Elements of Information Theory*, written by Thomas Cover and Joy Thomas and published by Wiely, New York, 1991. According to this method, the channel capacity $C_{wat}$ of a conventional radio communication apparatus is calculated by the following equation:

$$C_{wat} = \sum_{k=1}^{n'} \log_2 (1 + \frac{P'_k \lambda'_k}{\sigma'^2_N}) \qquad \ldots (3)$$

wherein n' is min(n'$_T$, n'$_R$), p'$_k$ denotes a power allocation value of each sub-channel, and $\lambda'_k$ denotes the k$^{th}$ eigenvalue of H'$^h$H'.

In the water-filling power allocation method, the power allocation value p'$_k$ of each sub-channel that maximizes the channel capacity C$_{wat}$ is measured using a 'Lagrange multiplier' as follows:

$$p'_k = \begin{cases} \dfrac{1}{\lambda'_0} - \dfrac{\sigma'^2_N}{\lambda'_k}, & if \ \lambda'_k > \dfrac{\lambda'_0}{\sigma'^2_N} \\ 0 & , \ otherwise \end{cases} \qquad , \qquad \ldots (4)$$

wherein $\lambda'_0$ denotes an invariable obtained from the limited total power P'$_T$.

When the water-filling power allocation method is adopted, an n'$_R$n'$_T$ complex number that is $2n'_R n'_T$ real number must be fed back to a transmitter from a receiver in a conventional radio communication apparatus. Therefore, with the water-filling power allocation method, the channel capacity can be maximized in a conventional radio communication apparatus, but a large amount of information must be fed back to the transmitter from a receiver.

WO 00/72464 describes a transmit diversity method using feedback. The feedback signals may be based on a number of different quantization constellations.

EP 973283 describes a spread spectrum communication system. Signals are generated in a mobile terminal and transmitted to a transmitter which in turn transmits a feedback signal including weights which is transmitted back to the mobile terminal.

EP 1207645 was published 22 May 2002 and is accordingly relevant under Art 54(3). It describes apparatus with multiple transmit antennae and multiple receive antennae. A reduced data feedback includes the rate and/or gain of each of a number of data substreams.

US 6,192,256 describes a receiving communication device determining a weight to be associated with at least one of the antennas of a transmitting communication device, and transmits weight information to this latter. This latter adjusts the weight associated with the at least one of the antennas according to weight information received from the receiving communication device.

According to the invention there is provided a radio communication system and method respectively defined in claims 1,6.

This radio communication apparatus maximizes channel capacity as well as reduces amount of information to be fed back from a receiver to a transmitter.

This method may maximize channel capacity.

The above object and advantages of the present invention will become more apparent by describing in detail a preferred embodiment thereof with reference to the attached drawings in which:

FIG. 1 is a block diagram of a radio communication apparatus with maximized channel capacity according to the present invention;

FIG. 2 is a flow chart explaining a radio communication method performed by the radio communication apparatus of FIG. 1;

FIG. 3 is a flow chart explaining a first embodiment of step 90 of FIG. 2 according to the present invention; and

FIG. 4 is a flow chart explaining a second embodiment of step 92 of FIG. 2 according to the present invention.

Hereinafter, the structure and operations of a radio communication apparatus with maximized channel capacity according to the present invention will be described with reference to the accompanying drawings.

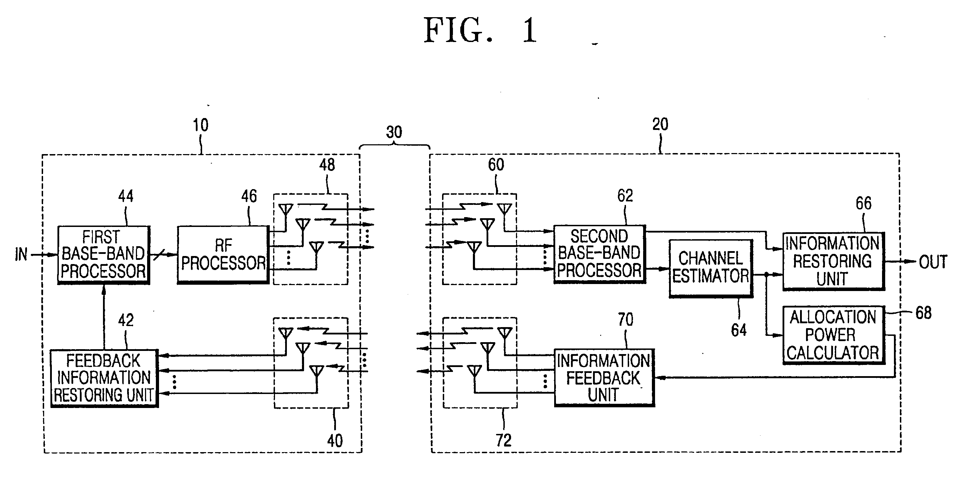

FIG. 1 is a block diagram of a radio communication apparatus with maximized channel capacity, according to the present invention, including a transmitter 10 and a receiver 20. Here, reference numeral '30' denotes a channel.

The transmitter 10 recovers feedback information from a feedback signal transmitted from the receiver 20 by radio, allocates transmission power to base-band signals including an information signal that is input from the outside via an input terminal IN, using the recovered feedback signal, modulates the base-band signals with the allocated transmission power, converts the modulated base-band signals into radio-frequency (RF) signals, and transmits the RF signals to the receiver 20 via the channel 30.

For these operations, the transmitter 10 includes first receiving antennae 40, a feedback information restoring unit 42, a first base-band processor 44, an RF processor 46, and first transmitting antennae 48.

The first receiving antennae 40 receive a feedback signal that is transmitted from the receiver 20 by radio via the channel 30, and output the received feedback signal to the feedback information restoring unit 42. Then, the feedback information restoring unit 42 recovers feedback information from the received feedback signal output from the first receiving antennae 40, and outputs the recovered feedback information to the first base-band processor 44.

The first base-band processor 44 determines a method of modulating an information signal input from the input terminal IN, processes the base-band signals, and then allocates transmission power for each of the base-band signals using the feedback information input from the feedback information restoring unit 42. For instance, the first base-band processor 44 performs a process on the base-band signals such as pulse shaping or base-band filtering. When the transmission power is allocated to each of the base-band signals, a level where each base-band signal is to be modulated, is determined. Further, the first base-band processor 44 modulates the base-band signals with the allocated transmission power on the basis of the determined modulating method, and outputs the modulated base-band signals to the RF processor 46.

Then, the RF processor 46 converts the base-band signals modulated by the first base-band processor 44 into RF signals, and outputs the RF signals to the first transmitting antennae 48. The first transmitting antennae 48 transmit the RF signals output from the RF processor 46 to the receiver 20 by radio via the channel 30.

Next, the receiver 20 estimates channel response experienced while the received RF signals is transmitted by radio via the channel 30, recovers an information signal from the RF signals using the estimated channel response, and transmits the information regarding transmission power to be allocated, which is calculated using the estimated channel response, as a feedback signal to the transmitter 10 by radio via the channel 30.

For these operations, the receiver 20 includes second transmitting antennae 60, a second base-band processor 62, a channel estimator 64, an information restoring unit 66, an allocation power calculator 68, an information feedback unit 70, and second transmitting antennae 72.

The second receiving antennae 60 receive RF signals transmitted from the first transmitting antennae 48, and output the received RF signals to the second base-band processor 62. Then, the second base-band processor 62 converts the RF signals output from the second receiving antennae 60 into base-band signals, performs signal processing, such as base-band filtering, on the converted base-band signals, and outputs the processed signals to the channel estimator 64 and the information restoring unit 66.

Next, the channel estimator 64 estimates channel response from the result on a pilot symbol, which is already known to the transmitter 10 and the receiver 20 before starting communication and selected among the results signal-processed by the second base-band processor 62, and outputs the estimated channel response to the information restoring unit 66 and the allocation power calculator 68. Then, the information restoring unit 66 recovers an information signal from the results signal-processed by the second base-band processor 62, using the channel response estimated by the channel estimator 64, and outputs the recovered information signal via an output terminal OUT. For the recovery of the information signal, the information restoring unit 66 may include equalizers (not shown) of the same number as the first transmitting antennae 48.

Also, the allocation power calculator 68 calculates transmission power, which is to be allocated to each of the base-band signals of the first transmitting antennae 48, using the channel response estimated by the channel estimator 64, so that the channel capacity can be maximized. Then, the allocation power calculator 68 quantizes the calculated transmission power, and outputs the quantized power to the information feedback unit 70.

According to the present invention, the allocation power calculator 68 calculates power $P_1, P_2, ..., P_{n_T}$ for maximizing the channel capacity $C_{prop}$ as transmission power to be allocated to base-band signals, as follows:

$$C_{prop} = \log_2 \det[I_{n_R} + \frac{1}{\sigma^2{}_N} HPH^h], \quad \sum_{k=1}^{n_T} p_k \le P_T, P: Diagonal\{p_1, p_2, ... p_{n_T}\} \quad ... (5)$$

wherein I denotes a unit matrix, $n_R$ indicates the number of the second receiving antennae 60, $n_T$ denotes the number of the first transmitting antennae 48, $\sigma_N^2$ denotes the dispersion of received Gaussian noise, H denotes a matrix of size $n_R \times n_T$ with regard to estimated channel response, $H^h$ denotes the conjugate transpose matrix of H, $P_T$ denotes the total amount of power available in the first transmitting antennae 48, P denotes a diagonal matrix indicating transmission power allocated to each of the first transmitting antennae 48.

It is noted that a polynomial of order $n=\min(n_T, n_R)$ is obtained in a log function if equation 5 is expanded with regard to the transmission power $P_1, P_2, ..., P_{n_T}$ to be allocated to the first transmitting antennae 48.

Also, according to the present invention, the allocation power calculator 68 calculates the following determinant as shown in equation 5:

$$\det[I_{n_R} + \frac{1}{\sigma^2_N} HPH^h]$$

$$= \det[I_{n_R} + \frac{1}{\sigma^2_N} \sum_{i=1}^{n_T} p_i H(i) H^h(i)]$$

$$= \{1 + \sum_{i_1=1}^{n_T} \frac{p_{i_1}}{\sigma^2_N} \det[H(i_1)^h H(i_1)]$$

$$+ \sum_{i_1=1}^{n_T} \sum_{i_2>i_1}^{n_T} \frac{p_{i_1}}{\sigma^2_N} \frac{p_{i_2}}{\sigma^2_N} \det[H^h(i_1,i_2)H(i_1,i_2)]$$

$$+ \sum_{i_1=1}^{n_T} \sum_{i_2>i_1}^{n_T} \sum_{i_3>i_2}^{n_T} \frac{p_{i_1}}{\sigma^2_N} \frac{p_{i_2}}{\sigma^2_N} \frac{p_{i_3}}{\sigma^2_N} \det[H^h(i_1,i_2,i_3)H(i_1,i_2,i_3)] + \dots$$

$$+ \sum_{i_1=1}^{n_T} \sum_{i_2>i_2}^{n_T} \dots \sum_{i_{n_T-1}>i_{n_T-2}}^{n_T} \frac{p_{i_1}}{\sigma^2_N} \frac{p_{i_2}}{\sigma^2_N} \dots \frac{p_{n_T-1}}{\sigma^2_N} \det[H^h(i_1,i_2,\dots,i_{n_T-1})H(i_1,i_2,\dots,i_{n_T-1})]$$

$$+ \sum_{i_1=1}^{n_T} \sum_{i_2>i_2}^{n_T} \dots \sum_{i_{n_T-1}>i_{n_T-2}}^{n_T} \sum_{i_{n_T}>i_{n_T-1}}^{n_T} \frac{p_{i_1}}{\sigma_N^2} \frac{p_{i_2}}{\sigma_N^2} \dots \frac{p_{n_T-1}}{\sigma_N^2} \frac{p_{n_T}}{\sigma_N^2} \det[H^h(i_1,i_2,\dots,i_n)H(i_1,i_2,\dots,i_{n_T})]\} ,,$$

wherein H(i, j, ...) denotes a sub-matrix of H consisting of i, j, ..., and equation 6 is obtained irrespective of a difference between $n_R$ and $n_T$. Here, it is possible to calculate the values of transmission power $P_1$, $P_2$, ..., $P_{n_T}$ to be allocated to the first transmitting antennae 48 that maximize the determinant of equation 6, using a numerical method such as a steepest decent method, Newton's method, and a conjugate gradient method which are disclosed in a publication entitled "Numerical Analysis" written by David Kincaid and Ward Cheney, published by Pacific Grove, California, 1991.

Meanwhile, the information feedback unit 70 modulates values calculated by the allocation power calculator 68, converts the modulated values into RF signals, and outputs the RF signals to the second transmitting antenna 72. Then, the second transmitting antenna 72 transmit the RF signals output from the information feedback unit 70 as feedback signals, which contain information regarding transmission power to be allocated, to the first receiving antennae 40 by radio via the channel 30. For this operation, the information feedback unit 70 performs the same functions as the first base-band processor 44 and the RF processor 46. In other words, as the first base-band processor 44, the information feedback unit 70 considers values calculated by the allocation power calculator 68 as base-band signals, and processes and modulates the values. Also, as the RF processor 46, the information feedback unit 70 converts the modulated values into RF signals, and outputs the RF signals to the second transmitting antenna 72.

In the event that the receiver 20 feeds back information regarding transmission power to be allocated to each of the first transmitting antennae 48 and the total amount of power $P_T$ is limited, feedback signals consist of $n_T$-1 real numbers. That is, $n_T$-1 real numbers are fed back to the transmitter 10 from the receiver 20 as a feedback signal.

Hereinafter, a radio communication method, according to the present invention, performed by the radio communication apparatus of FIG. 1 will be described with reference to the accompanying drawings.

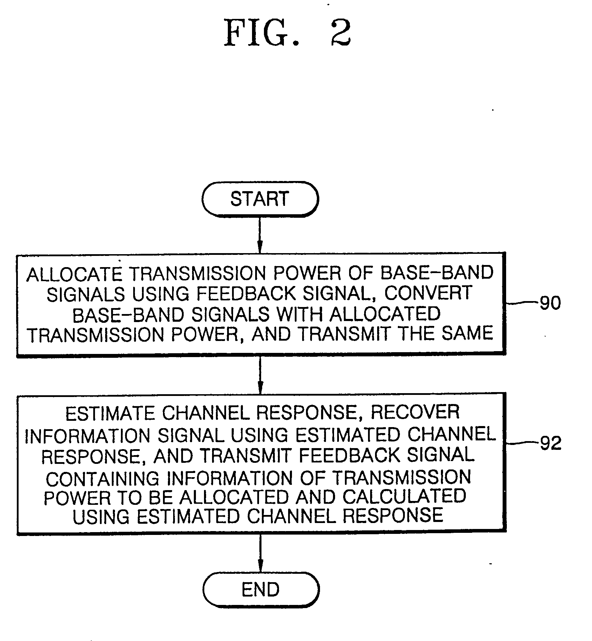

FIG. 2 is a flow chart explaining a method of performing radio communication by the radio communication apparatus of FIG. 1. In this method, base-band signals are modulated and transmitted with the transmission power allocated using feedback information (step 90). Then, an information signal is recovered using a channel response estimated from RF signals received and information regarding the transmission power allocated is obtained (step 92).

In detail, in step 90, the transmitter 10 of FIG. 1 allocates the transmission power to each of base-band signals containing an information signal input from the outside, using feedback information recovered from a feedback signal, modulates the base-band signals with the allocated transmission power, converts the modulated base-band signals into RF signals, and transmits the RF signals to the receiver 20.

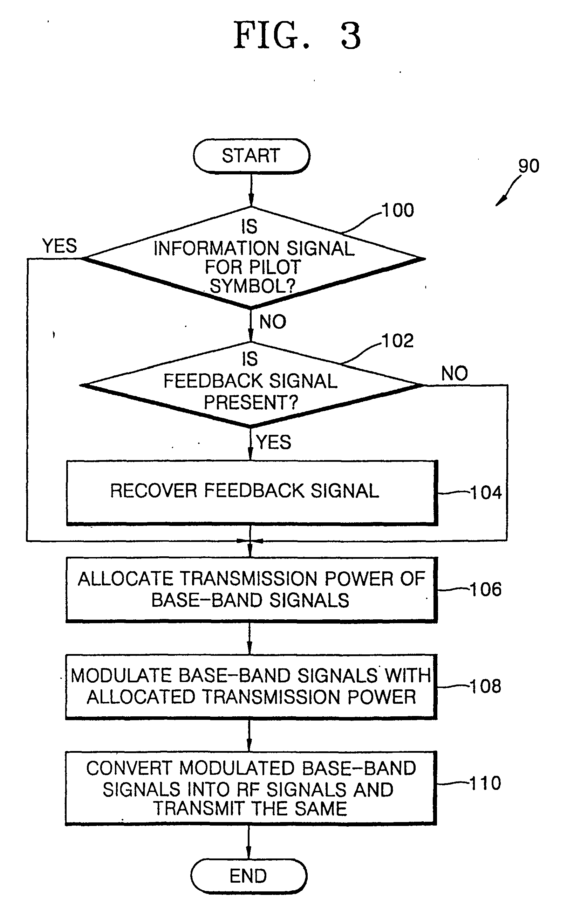

FIG. 3 is a flow chart explaining a preferred embodiment of step 90 of FIG. 2 according to the present invention. In this embodiment, transmission power applied to the base-band signals is allocated equally or unequally according to the type of an information signal and according as feedback information exists or not (step 100 through 106). Then, the base-band signals, which are modulated with the allocated transmission power, are converted into RF signals and transmitted (step 108 and 110).

In detail, according to the preferred embodiment of the present invention of step 90 of FIG. 2 illustrated in FIG. 3, the transmitter 10 of FIG. 1 determines whether an information signal input via the input terminal IN is a pilot symbol or not (step 100). If it is determined that the information signal is not a pilot symbol, the transmitter 10 checks for the presence of feedback information (step 102). To perform step 102, the transmitter 10 checks if the feedback signal is transmitted from the receiver 10. If feedback information is present, the transmitter 10 recovers the feedback information from the received feedback signal (step 104).

On the contrary, if it is determined that the information signal is the pilot symbol or the feedback information is not present or after step 104, the transmitter 10 allocates transmission power for base-band signals (step 106). For instance, after step 104, the transmitter 10 unequally allocates transmission power for the base-band signals using the feedback information, and can equally allocate transmission power for the base-band signals corresponding to the pilot signal if it is determined that the information signal is the pilot symbol or the feedback information is not present. However, according to another embodiment of the present invention of step 90 of FIG. 2, if it is determined that the feedback information is not present after checking once in step 102, the presence of the feedback information may be checked again instead of proceeding to step 104 or 106. In fact, the presence of the feedback information can be checked continuously in step 102 unlike in FIG. 3.

After step 106, the transmitter 10 modulates the base-band signals with the allocated transmission power on the basis of a predetermined modulation way (step 108). The aforementioned steps 100 through 108 are performed by the first base-band processor 44 of FIG. 1.

After step 108, the RF processor 46 converts the base-band signals, which have been modulated by the first base-band processor 44, into RF signals, and transmits the RF signals to the receiver 20 (step 110).

Meanwhile, after step 90, the receiver 20 receives RF signals transmitted from the transmitter 10 by radio via the channel 30, estimates a channel response undergone during the transmission of the RF signals, recovers information signals from the RF signals using the estimated channel response, and transmits a feedback signal, which contains information regarding transmission power to be allocated and calculated using the estimated channel response, to the transmitter 10 by radio (step 92).

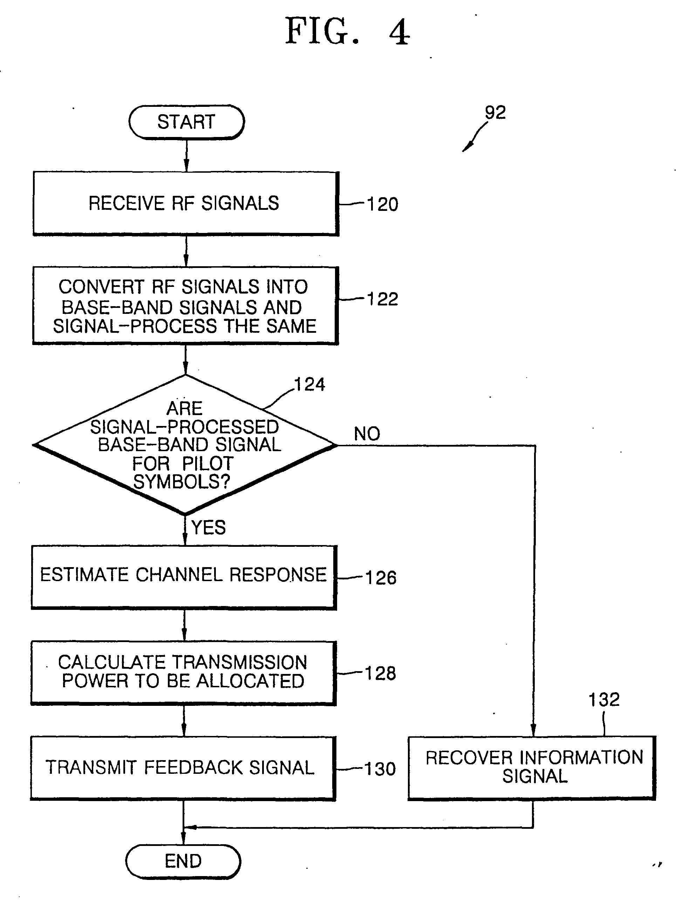

FIG. 4 is a flow chart explaining a preferred embodiment of the present invention of step 92 of FIG. 2 performed by the receiver 20 of FIG. 1. In this embodiment, an information signal is recovered or a feedback signal is obtained, depending on whether values, which were obtained by converting received RF signals into base-band signals and by processing the converted result, are pilot symbols or not (steps 120 through 132).

In detail, the second receiving antennae 60 receive RF signals transmitted in step 90 (step 120). After step 120, the second base-band processor 62 of FIG. 1 converts the received RF signals into base-band signals, and signal-processes the converted base-band signals (step 122). After step 122, the second base-band processor 62 determines whether the signal-processed results are for pilot symbols (step 124).

If it is determined that the signal-processed results are for pilot symbols, the second base-band processor 62 outputs the signal-processed result for pilot symbols to the channel estimator 64, and then, the channel estimator 64 estimates the channel response from the signal-processed result for pilot symbols (step 126). After step 126, the allocation power calculator 68 calculates transmission power to be allocated to the base-band signals output from the first transmitting antennae 48, using the channel response estimated by the channel estimator 64 (step 128). After step 128, the information feedback unit 70 modulates values calculated by the allocation power calculator 68, converts the modulated values into RF signals, and transmits the RF signals as the feedback signal to the transmitter 10 by radio via the second transmitting antennae 72 (step 130).

However, if it is determined that the signal-processed result in step 124 are not for the pilot symbols, the information restoring unit 66 recovers an information signal from the processed results output from the second base-band processor 62, using the estimated channel response, and outputs the recovered information signal via an output terminal OUT (step 132).

As a result, in a radio communication apparatus and a method therefor according to the present invention, much more transmission power is allocated to one of the first transmitting antennae 48 that is in a good state. Therefore, much more channel capacity can be obtained than with a conventional equal power allocation method.

Also, with a radio communication apparatus and a method therefor, according to the present invention, it is possible to obtain almost the similar amount of channel capacity while reducing the amount of information to feed back, compared to a conventional water-filling power allocation method. For instance, in the conventional water-filling power allocation method, all elements of the channel response matrix H' must be fed back from a receiver to a transmitter, and thus the amount of information to be fed back is $(2n'_R n'_T)N_q$ (Here, Nq means the number of bits that is required for quantizing the real number) if elements of the channel response matrix H' are complex numbers. Here, if V and P are fed back instead of H' the amount of information to be fed back is $(n'^2_T + n'_T - 1)N_q$. That is, a total of $n'^2_T$ complex numbers

must be fed back because the decoupling matrix V is a unitary matrix of $n'_R \times n'_T$, and $n'_T - 1$ complex numbers must be fed back because the degree of freedom in a total of $n'_T$ channels is reduced by 1 due to limited power. However, in the radio communication apparatus and the method therefor according to the present invention, only information that represents the amount of transmission power to be allocated to the first transmitting antennae 48 is fed back, and thus the amount of information fed back to the transmitter 10 from the receiver 20 is $(n_T - 1)N_q$. Therefore, in the radio communication apparatus and the method therefor of the present invention, the amount of information to be fed back can be reduced still more than the amount of information to be fed back in a conventional water-filling power allocation method.

While this invention has been particularly shown and described with reference to a preferred embodiment thereof, it will be understood by those skilled in the art that various changes in form and details may be made therein.

As described above, in the radio communication apparatus with maximized channel capacity and the method therefore according to the present invention, only information on the amount of transmission power to be allocated to first transmitting antennae is fed back, unlike in a conventional radio communication apparatus and a method therefor that feeds back channel response information from a receiver to a transmitter. As a result, according to the present invention, the channel capacity can be maximized while minimizing the amount of information in a feedback signal. Further, decoupling conversion is not required, thereby reducing the size and cost of manufacturing hardware.

**Claims**

1. A radio communication system having maximum channel capacity, the radio communication system comprising:

   a transmitter (10) having a first base-band processor (44) arranged to allocate transmission power to each of base-band signals of each of a plurality of $n_T$ first transmitting antennas containing an information signal input from outside, using feedback information recovered from a feedback signal and to modulate the base-band signals with the allocated transmission power, an RF processor (46) arranged to convert the base-band signals into RF signals, and a plurality of $n_T$ first transmitting antennas (48) for transmitting the RF signals; and
   a receiver (20) having a plurality of $n_R$ second receiving antennas (60), a channel estimator (64) arranged to estimate a channel response experienced during the transmission of the received RF signals, an information restoring unit (66) arranged to recover the information signal from the RF signals using the estimated channel response, and a transmitting means arranged to transmit feedback information as a feedback signal to the transmitter by radio;
   wherein the receiver includes an allocation power calculator (68) for calculating the amount of transmission power to be allocated to each of the respective first transmitting antennas (48) using the channel response estimated by the channel estimator (64);
   **characterised in that**
   the feedback signal only includes the transmission power to be allocated to the first transmitting antennas (48) as $(n_T - 1)$ real numbers;
   further **characterised in that** the transmitter (10) is arranged:

   (a1) to determine (100) whether the information signal is a pilot symbol;
   (a2) to check (102) the presence of the feedback information if it is determined that the information signal is not the pilot symbol;
   (a3) to recover (104) the feedback information from the received feedback signal if it is determined that the feedback information is present;
   (a4) to allocate (100) the transmission power to the base-band signals using the recovered feedback information;
   (a5) to modulate (108) the base-band signals with the allocated transmission power by a predetermined modulation method; and
   (a6) to convert (110) the converted base-band signals into the RF signals, and transmitting the RF signals to the receiver.

2. The radio communication system of claim 1, wherein the transmitter further comprises:

   first receiving antennas (40) for receiving the feedback signal transmitted from the receiver; and
   a feedback information restoring unit (42) for recovering the feedback information from the feedback signal output from the first receiving antennas, and for outputting the recovered feedback information;
   wherein the first base-band processor (44) is arranged to modulate the base-band signals with the allocated transmission power by a predetermined modulation method.

3. The radio communication system of claim 2, wherein the receiver further comprises:

   a second base-band processor (62) for converting the RF signals received by the second receiving antennas into the base-band signals and processing the converted base-band signals;

   wherein the channel estimator (64) is arranged to estimate the channel response from a signal on a pilot symbol which is selected among the signals processed by the second base-band processor, and to output the estimated channel response;

   the information restoring unit (66) is arranged to recover the information signal from the signals processed by the second base-band processor, using the estimated channel response; and

   the transmitting means includes an information feedback unit (70) for modulating the transmission power calculated by the allocation power calculator, converting the modulated transmission power into RF signals, and outputting the RF signals, and second transmitting antennas (72) for transmitting the RF signals output from the information feedback unit as the feedback signal to the first receiving antennas.

4. The radio communication system of claim 3, wherein the allocation power calculator (68) is arranged to determine powers $p_1, p_2, ..., p_{n_T}$ which maximize channel capacity $C_{prop}$ as the transmission power to be allocated to the base-band signals of the first transmitting antennas, using the following equation:

$$C_{prop} = \log_2 \det[I_{n_R} + \frac{1}{\sigma^2_N} HPH^h], \sum_{k=1}^{n_T} p_k \le p_T, P: Diagonal\{p_1, p_2, ..., p_{n_T}\}$$

wherein det denotes a determinant, I denotes a unit matrix, $n_R$ indicates the number of the second receiving antennas, $n_T$ denotes the number of the first transmitting antennas, $\sigma_N^2$ denotes the dispersion of received Gaussian noise, H denotes a matrix of size $n_R$ x $n_T$ regarding the estimated channel response, $H^h$ denotes conjugate transpose matrix of H, $P_T$ denotes the total amount of power available in the first transmitting antennas, and P denotes a diagonal matrix.

5. The radio communication system of claim 4, wherein the allocation power calculator (68) is arranged to calculate the determinant det by the following equation:

$$\det[I_{n_R} + \frac{1}{\sigma^2_N} HPH^h]$$

$$= \det[I_{n_R} + \frac{1}{\sigma^2_N} \sum_{i=1}^{n_T} p_i H(i) H^h(i)]$$

$$= \{1 + \sum_{i_1=1}^{n_T} \frac{p_{i_1}}{\sigma^2_N} \det[H(i_1)^h H(i_1)]$$

$$+ \sum_{i_1=1}^{n_T} \sum_{i_2>i_1}^{n_T} \frac{p_{i_1}}{\sigma^2_N} \frac{p_{i_2}}{\sigma^2_N} \det[H^h(i_1,i_2) H(i_1,i_2)]$$

$$+ \sum_{i_1=1}^{n_T} \sum_{i_2>i_1}^{n_T} \sum_{i_3>i_2}^{n_T} \frac{p_{i_1}}{\sigma^2_N} \frac{p_{i_2}}{\sigma^2_N} \frac{p_{i_3}}{\sigma^2_N} \det[H^h(i_1,i_2,i_3) H(i_1,i_2,i_3)] + ...$$

$$+ \sum_{i_1=1}^{n_T} \sum_{i_2>i_1}^{n_T} ... \sum_{i_{n_c-2}>i_{n_c-2}}^{n_T} \frac{p_{i_1}}{\sigma^2_N} \frac{p_{i_2}}{\sigma^2_N} ... \frac{p_{n_T-1}}{\sigma^2_N} \det[H^h(i_1,i_2,...,i_{n_T-1}) H(i_1,i_2,...,i_{n_T-1})]$$

$$+ \sum_{i_1=1}^{n_T} \sum_{i_2>i_1}^{n_T} ... \sum_{i_{n_r-1}>i_{n_r-2}}^{n_T} \sum_{i_{n_r}>i_{n_r-1}}^{n_T} \frac{p_{i_1}}{\sigma^2_N} \frac{p_{i_2}}{\sigma^2_N} ... \frac{p_{n_T-1}}{\sigma^2_N} \frac{p_{n_T}}{\sigma^2_N} \det[H^h(i_1,i_2,...,i_n) H(i_1,i_2,...,i_{n_T})]\}$$

**6.** A radio communication method comprising:

(a) in a transmitter (10), allocating transmission power to each of base-band signals of a plurality of $n_T$ first transmitting antennas, which contain an information signal given from outside, using feedback information recovered from a feedback signal, modulating the base-band signals with the allocated transmission power, converting the modulated base-band signals into RF signals, and transmitting the RF signals using the plurality $n_T$ of first transmitting antennas; and

(b) in a receiver (20), receiving the RF signals on a plurality $n_R$ of second receiving antennas, estimating the channel response experienced during the transmission of the RF signals, recovering the information signal from the RF signals using the estimated channel response, and transmitting the feedback signal containing information regarding the transmission power to be allocated, calculated using the estimated channel response, to the transmitter by radio; and

wherein the amount of transmission power to be allocated to each of the first transmission antennas is calculated in the receiver (20) using the estimated channel response;

**characterised in that**

the feedback signal only includes the transmission power to be allocated to the first transmitting antennas (48) as $(n_T-1)$ real numbers; wherein step (a) comprises:

(a1) determining (100) whether the information signal is a pilot symbol;

(a2) checking (102) the presence of the feedback information if it is determined that the information signal is not the pilot symbol;

(a3) recovering (104) the feedback information from the received feedback signal if it is determined that the feedback information is present;

(a4) allocating (100) the transmission power to the base-band signals using the recovered feedback information;

(a5) modulating (108) the base-band signals with the allocated transmission power by a predetermined modulation method; and

(a6) converting (110) the converted base-band signals into the RF signals, and transmitting the RF signals to the receiver.

**7.** The radio communication method of claim 6 wherein step (a) further comprises the step of (a7) equally allocating the transmission power to the base-band signals corresponding to the pilot symbol if the information signal is the pilot symbol, converting the base-band signals, and returning back to step (a5).

**8.** The radio communication method of claim 7, wherein during step (a2), the presence of the feedback information is checked repeatedly.

**9.** The radio communication method of claim 7, wherein step (a) further comprises the step of (a8) equally allocating the transmission power to the base-band signals if it is determined that the feedback information is not present in step (a2), and returning back to step (a5).

**10.** The radio communication method of claim 6, wherein step (b) comprises:

(b1) receiving (120) the RF signals transmitted in step (a);

(b2) converting (122) the RF signals received in step (b1) into the base-band signals and processing the base-band signals;

(b3) determining (124) whether the base-band signals processed in step (b2) are for the pilot symbol;

(b4) estimating (126) the channel response from the processed base-band signals that are for the pilot symbol if the base-band signals processed in step (b2) are for the pilot symbol;

(b5) calculating (128) the transmission power to be allocated to the base-band signals, using the estimated channel response;

(b6) modulating the calculated transmission power, converting the modulated transmission power into RF signals, and transmitting (130) the RF signals as the feedback signals to the transmitter; and

(b7) recovering (132) the information signal from the base-band signals processed in step (b2) if it is determined that the base-band signals processed in step (b2) are not for the pilot symbol, using the estimated channel response.

## EP 1 257 069 B1

**Patentansprüche**

1. Funkkommunikationssystem mit maximaler Kanalkapazität, wobei das Funkkommunikationssystem Folgendes umfasst:

   einen Sender (10) mit einem ersten Basisbandprozessor (44), ausgelegt zum Zuteilen von Sendeleistung zu jedem der Basisbandsignale von jeder von $n_T$ mehreren ersten Sendeantennen, eine von außen eingegebenes Informationssignal enthaltend, unter Verwendung von von einem Rückführsignal wiedergewonnenen Rückführinformationen, und zum Modulieren der Basisbandsignale mit der zugeteilten Sendeleistung, einen HF-Prozessor (46), ausgelegt zum Umwandeln der Basisbandsignale in HF-Signale, und $n_T$ mehrere erste Sendeantennen (48) zum Senden der HF-Signale; und
   einen Empfänger (20) mit $n_R$ mehreren zweiten Empfangsantennen (60), einen Kanalschätzer (64) ausgelegt zum Schätzen einer während der Übertragung der empfangenen HF-Signale erfahrenen Kanalantwort, eine Informationswiederherstellungseinheit (66) ausgelegt zum Wiedergewinnen des Infomationssignals aus den HF-Signalen unter Verwendung der geschätzten Kanalantwort, und ein Sendemittel ausgelegt zum Senden von Rückführinformationen als ein Rückführsignal zu dem Sender über Funk;
   wobei der Empfänger einen Zuteilungsleistungsrechner (68) enthält zum Berechnen der Größe an Sendeleistung zur Zuteilung zu jeder der jeweiligen ersten Sendeantennen (48) unter Verwendung der von dem Kanalschätzer (64) geschätzten Kanalantwort;
   **dadurch gekennzeichnet, dass**
   das Rückführsignal nur die den ersten Sendeantennen (48) zuzuteilende Sendeleistung als $(n_T-1)$ reelle Zahlen enthält;
   weiterhin **dadurch gekennzeichnet, dass** der Sender (10) ausgelegt ist zum:

   (a1) Bestimmen (100), ob das Informationssignal ein Pilotsymbol ist;
   (a2) Prüfen (102) der Anwesenheit der Rückführinformationen, falls bestimmt wird, dass das Informationssignal nicht das Pilotsymbol ist;
   (a3) Wiedergewinnen (104) der Rückführinformationen aus dem empfangenen Rückführsignal, falls bestimmt wird, dass die Rückführinformationen vorliegen;
   (a4) Zuteilen (100) der Sendeleistung zu den Basisbandsignalen unter Verwendung der wiedergewonnen Rückführinformationen;
   (a5) Modulieren (108) der Basisbandsignale mit der zugeteilten Sendeleistung durch ein vorbestimmtes Modulationsverfahren; und
   (a6) Umwandeln (110) der umgewandelten Basisbandsignale in die HF-Signale und Senden der HF-Signale an den Empfänger.

2. Funkkommunikationssystem nach Anspruch 1, wobei der Sender weiterhin Folgendes umfasst:

   erste Empfangsantennen (40) zum Empfangen des von dem Empfänger gesendeten Rückführsignals und eine Rückführinformationswiederherstellungseinheit (42) zum Wiedergewinnen der Rückführinformationen aus dem von den ersten Empfangsantennen ausgegebenen Rückführsignal, und zum Ausgeben der Wiedergewonnenen Rückführinformationen;
   wobei der erste Basisbandprozessor (44) ausgelegt ist zum Modulieren der Basisbandsignale mit der zugeteilten Sendeleistung durch ein vorbestimmtes Modulationsverfahren.

3. Funkkommunikationssystem nach Anspruch 2, wobei der Empfänger weiterhin Folgendes umfasst:

   einen zweiten Basisbandprozessor (62) zum Umwandeln der von den zweiten Empfangsantennen empfangenen HF-Signale in die Basisbandsignale und Verarbeiten der umgewandelten Basisbandsignale;
   wobei der Kanalschätzer (64) ausgelegt ist zum Schätzen der Kanalantwort anhand eines Signals auf einem Pilotsymbol, das ausgewählt wird unter den von dem zweiten Basisbandprozessor verarbeiteten Signalen, und zum Ausgeben der geschätzten Kanalantwort;
   wobei die Informationswiederherstellungseinheit (66) ausgelegt ist zum Wiedergewinnen des Informationssignals aus den von dem zweiten Basisbandprozessor verarbeiteten Signalen unter Verwendung der geschätzten Kanalantwort; und
   wobei das Sendemittel eine Informationsrückführeinheit (70) zum Modulieren der von dem Zuteilungsleistungsrechner berechneten Sendeleistung, Umwandeln der modulierten Sendeleistung in HF-Signale und Ausgeben der HF-Signale, und zweite Sendeantennen (72) zum Senden der von der Informationsrückführeinheit ausgegebenen HF-Signale als das Rückführsignal an die ersten Empfangsantennen enthält.

4. Funkkommunikationssystem nach Anspruch 3, wobei der Zuteilungsleistungsrechner (68) ausgelegt ist zum Bestimmen von Leistungen $p_1, p_2, \ldots p_{nT}$, die die Kanalkapazität $C_{prop}$ maximieren, als die Sendeleistung, die den Basisbandsignalen der ersten Sendeantennen zugeteilt werden soll, unter Einsatz der folgenden Gleichung:

$$C_{prop} = \log_2 \det\left[I_{n_R} + \frac{1}{\sigma^2{}_N} HPH^h\right], \sum_{k=1}^{n_T} p_k \leq p_T, P: Diagonal\{p_1, p_2, \ldots, p_{n_T}\}$$

wobei det eine Determinante bezeichnet, I eine Einheitsmatrix, $n_R$ die Anzahl der zweiten Empfangsantennen, $n_T$ die Anzahl der ersten Sendeantennen, $\sigma_N{}^2$ die Verteilung des empfangenen Gaußschen Rauschens, H eine Matrix der Größe $n_R$ x $n_T$ hinsichtlich der geschätzten Kanalantwort, $H^h$ eine konjugierte transponierte Matrix von H, $P_T$ die in den ersten Sendeantennen verfügbare Gesamtleistungsmenge und P eine Diagonalmatrix.

5. Funkkommunikationssystem nach Anspruch 4, wobei der Zuteilungsleistungsrechner (68) ausgelegt ist zum Berechnen der Determinante det durch die folgende Gleichung:

$$\det\left[I_{n_R} + \frac{1}{\sigma^2{}_N} HPH^h\right]$$

$$= \det\left[I_{n_R} + \frac{1}{\sigma^2{}_N} \sum_{i=1}^{n_T} p_i H(i) H^h(i)\right]$$

$$= \{1 + \sum_{i_1=1}^{n_T} \frac{p_{i_1}}{\sigma^2{}_N} \det[H(i_1)^h H(i_1)]$$

$$+ \sum_{i_1=1}^{n_T} \sum_{i_2>i_1}^{n_T} \frac{p_{i_1}}{\sigma^2{}_N} \frac{p_{i_2}}{\sigma^2{}_N} \det[H^h(i_1,i_2) H(i_1,i_2)]$$

$$+ \sum_{i_1=1}^{n_T} \sum_{i_2>i_1}^{n_T} \sum_{i_3>i_2}^{n_T} \frac{p_{i_1}}{\sigma^2{}_N} \frac{p_{i_2}}{\sigma^2{}_N} \frac{p_{i_3}}{\sigma^2{}_N} \det[H^h(i_1,i_2,i_3) H(i_1,i_2,i_3)] + \ldots$$

$$+ \sum_{i_1=1}^{n_T} \sum_{i_2>i_2}^{n_T} \cdots \sum_{i_{n_T-2}>i_{n_T-2}}^{n_T} \frac{p_{i_1}}{\sigma^2{}_N} \frac{p_{i_2}}{\sigma^2{}_N} \cdots \frac{p_{n_T-1}}{\sigma^2{}_N} \det[H^h(i_1,i_2,\ldots,i_{n_T-1}) H(i_1,i_2,\ldots,i_{n_T-1})]$$

$$+ \sum_{i_1=1}^{n_T} \sum_{i_2>i_2}^{n_T} \cdots \sum_{i_{n_T-1}>i_{n_T-1}}^{n_T} \sum_{i_{n_T}>i_{n_T-1}}^{n_T} \frac{p_{i_1}}{\sigma^2{}_N} \frac{p_{i_2}}{\sigma^2{}_N} \cdots \frac{p_{n_T-1}}{\sigma^2{}_N} \frac{p_{n_T}}{\sigma^2{}_N} \det[H^h(i_1,i_2,\ldots,i_n) H(i_1,i_2,\ldots,i_{n_T})]\}$$

6. Funkkommunikationsverfahren, das Folgendes umfasst:

   (a) in einem Sender (10) das Zuteilen von Sendeleistung zu jedem von Basisbandsignalen von $n_T$ mehreren ersten Sendeantennen, die ein von außen eingegebenes Informationssignal enthalten, unter Verwendung von von einem Rückführsignal wiedergewonnenen Rückführinformationen, Modulieren der Basisbandsignale mit der zugeteilten Sendeleistung, Umwandeln der modulierten Basisbandsignale in HF-Signale, und Senden der HF-Signale unter Verwendung der $n_T$ mehreren ersten Sendeantennen; und
   (b) in einem Empfänger (20) das Empfangen der HF-Signale auf $n_R$ mehreren zweiten Empfangsantennen, Schätzen der während der Übertragung der HF-Signale erfahrenen Kanalantwort, Wiedergewinnen des Informationssignals aus den HF-Signalen unter Verwendung der geschätzten Kanalantwort und Übertragen des Rückführsignals, das Informationen hinsichtlich der zuzuteilenden Sendeleistung enthält, berechnet unter Verwendung der geschätzten Kanalantwort, zu dem Sender über Funk; und

wobei die Größe an Sendeleistung zur Zuteilung zu jeder der ersten Sendeantennen in dem Empfänger (20) berechnet wird, unter Verwendung der geschätzten Kanalantwort;

**dadurch gekennzeichnet, dass**

das Rückführsignal nur die den ersten Sendeantennen (48) zuzuteilende Sendeleistung als $(n_T-1)$ reele Zahlen enthält; wobei Schritt (a) Folgendes umfasst:

(a1) Bestimmen (100), ob das Informationssignal ein Pilotsymbol ist;

(a2) Prüfen (102) der Anwesenheit der Rückführinformationen, falls bestimmt wird, dass das Informationssignal nicht das Pilotsymbol ist;

(a3) Wiedergewinnen (104) der Rückführinformationen aus dem empfangenen Rückführsignal, falls bestimmt wird, dass die Rückführinformationen vorliegen;

(a4) Zuteilen (100) der Sendeleistung zu den Basisbandsignalen unter Verwendung der wiedergewonnenen Rückführinformationen;

(a5) Modulieren (108) der Basisbandsignale mit der zugeteilten Sendeleistung durch ein vorbestimmtes Modulationsverfahren; und

(a6) Umwandein (110) der umgewandelten Basisbandsignale in die HF-Signale und Senden der HF-Signale an den Empfänger.

7. Funkkommunikationsverfahren nach Anspruch 6, wobei Schritt (a) weiterhin den Schritt von (a7) umfasst, die Sendeleistung den Basisbandsignalen entsprechend dem Pilotsymbol gleichermaßen zuzuteilen, falls das Informationssignal das Pilotsymbol ist, Umwandeln der Basisbandsignale und Rückkehr zu Schritt (a5).

8. Funkkommunikationsverfahren nach Anspruch 7, wobei während Schritt (a2) die Anwesenheit der Rückführinformationen wiederholt geprüft wird.

9. Funkkommunikationsverfahren nach Anspruch 7, wobei Schritt (a) weiterhin den Schritt von (a8) umfasst, die Sendeleistung den Basisbandsignalen gleichermaßen zuzuteilen, falls in Schritt (a2) bestimmt wird, dass die Rückführinformationen nicht anwesend sind, und Rückkehr zu Schritt (a5).

10. Funkkommunikationsverfahren nach Anspruch 6, wobei Schritt (b) Folgendes umfasst:

(b1) Empfangen (120) der in Schritt (a) gesendeten HF-Signale;

(b2) Umwandeln (122) der in Schritt (b1) empfangenen HF-Signale in die Basisbandsignale und Verarbeiten der Basisbandsignale;

(b3) Bestimmen (124), ob die in Schritt (b2) verarbeiteten Basisbandsignale für das Pilotsymbol sind;

(b4) Schätzen (126) der Kanalantwort anhand der verarbeiteten Basisbandsignale, die für das Pilotsymbol sind, falls die in Schritt (b2) verarbeiteten Basisbandsignale für das Pilotsymbol sind;

(b5) Berechnen (128) der den Basisbandsignalen zuzuteilenden Sendeleistung unter Verwendung der geschätzten Kanalantwort;

(b6) Modulieren der berechneten Sendeleistung, Umwandeln der modulierten Sendeleistung in HF-Signale und Senden (130) der HF-Signale als die Rückführsignal an den Sender; und

(b7) Wiedergewinnen (132) des Informationssignals aus den in Schritt (b2) verarbeiteten Basisbandsignalen, falls bestimmt wird, dass die in Schritt (b2) verarbeiteten Basisbandsignale nicht für das Pilotsymbol sind, unter Verwendung der geschätzten Kanalantwort.

## Revendications

1. Système de radiocommunication ayant une capacité de canal maximale, le système de radiocommunication comprenant :

un émetteur (10) comportant un premier processeur de bande de base (44) agencé pour allouer une puissance de transmission à chacun des signaux de bande de base de chacune d'une pluralité de $n_T$ premières antennes émettrices contenant un signal d'informations entré depuis l'extérieur, en utilisant des informations de retour récupérées d'un signal de retour et pour moduler les signaux de bande de base avec la puissance de transmission allouée, un processeur RF (46) agencé pour convertir les signaux de bande de base en signaux RF, et une pluralité de $n_T$ premières antennes émettrices (48) permettant de transmettre les signaux RF ; et

un récepteur (20) comportant une pluralité de $n_R$ secondes antennes réceptrices (60), un estimateur de canal (64) agencé pour estimer une réponse de canal subie pendant la transmission des signaux RF reçus, une unité de rétablissement d'informations (66) agencée pour récupérer le signal d'informations des signaux RF en utilisant la réponse de canal estimée, et un moyen émetteur agencé pour transmettre des informations de retour sous forme de signal de retour à l'émetteur par radio ;

dans lequel le récepteur inclut un calculateur de puissance d'allocation (68) permettant de calculer la quantité de puissance de transmission à allouer à chacune des premières antennes émettrices (48) respectives en utilisant la réponse de canal estimée par l'estimateur de canal (64) ;

**caractérisé en ce que**

le signal de retour n'inclut que la puissance de transmission à allouer aux premières antennes émettrices (48) sous forme de ($n_T$-1) nombres réels ;

**caractérisé en outre en ce que** l'émetteur (10) est agencé pour :

(a1) déterminer (100) si le signal d'informations est un symbole pilote ;

(a2) vérifier (102) la présence des informations de retour s'il est déterminé que le signal d'informations n'est pas le symbole pilote ;

(a3) récupérer (104) les informations de retour du signal de retour reçu s'il est déterminé que les informations de retour sont présentes ;

(a4) allouer (100) la puissance de transmission aux signaux de bande de base en utilisant les informations de retour récupérées ;

(a5) moduler (108) les signaux de bande de base avec la puissance de transmission allouée par un procédé de modulation prédéterminé ; et

(a6) convertir (110) les signaux de bande de base convertis en les signaux RF, et

transmettre les signaux RF au récepteur.

2. Système de radiocommunication selon la revendication 1, dans lequel l'émetteur comprend en outre :

des premières antennes réceptrices (40) permettant de recevoir le signal de retour transmis du récepteur et une unité de rétablissement d'informations de retour (42) permettant de récupérer les informations de retour du signal de retour produit en sortie par les premières antennes réceptrices, et permettant de produire en sortie les informations de retour récupérées ;

dans lequel le premier processeur de bande de base (44) est agencé pour moduler les signaux de bande de base avec la puissance de transmission allouée par un procédé de modulation prédéterminé.

3. Système de radiocommunication selon la revendication 2, dans lequel le récepteur comprend en outre :

un second processeur de bande de base (62) permettant de convertir les signaux RF reçus par les secondes antennes réceptrices en les signaux de bande de base et traiter les signaux de bande de base convertis ;

dans lequel l'estimateur de canal (64) est agencé pour estimer la réponse de canal à partir d'un signal sur un symbole pilote qui est choisi parmi les signaux traités par le second processeur de bande de base, et pour produire en sortie la réponse de canal estimée ;

l'unité de rétablissement d'informations (66) est agencée pour récupérer le signal d'informations des signaux traités par le second processeur de bande de base, en utilisant la réponse de canal estimée ; et

le moyen de transmission inclut une unité de retour d'informations (70) permettant de moduler la puissance de transmission calculée par le calculateur de puissance d'allocation, convertir la puissance de transmission modulée en signaux RF, et produire en sortie les signaux RF, et des secondes antennes émettrices (72) permettant de transmettre les signaux RF produits en sortie de l'unité de retour d'informations en tant que le signal de retour aux premières antennes réceptrices.

4. Système de radiocommunication selon la revendication 3, dans lequel le calculateur de puissance d'allocation (68) est agencé pour déterminer des puissances $p_1$, $p_2$, ..., $p_{nT}$ qui maximisent la capacité de canal $C_{prop}$ en tant que puissance de transmission à allouer aux signaux de bande de base des premières antennes émettrices, en utilisant l'équation suivante :

$$C_{prop} = \log_2 \det[I_{n_R} + \frac{1}{\sigma^2_N} HPH^h], \sum_{k=1}^{n_T} p_k \leq p_T, P: Diagonal\{p_1, p_2, ..., p_{n_T}\}$$

où det indique un déterminant, 1 indique une matrice unitaire, $n_R$ représente le nombre des secondes antennes réceptrices, $n_T$ indique le nombre des premières antennes émettrices, $\sigma_N^2$ indique la dispersion de bruit gaussien reçu, H indique une matrice de taille $n_R$ x $n_T$ concernant la réponse de canal estimée, $H^h$ indique la matrice transposée conjuguée de H, $P_T$ indique la quantité totale de puissance disponible dans les premières antennes émettrices, et P indique une matrice diagonale.

**5.** Système de radiocommunication selon la revendication 4, dans lequel le calculateur de puissance d'allocation (68) est agencé pour calculer le déterminant det par l'équation suivante :

$$\det[I_{n_R} + \frac{1}{\sigma^2{}_N} HPH^h]$$

$$= \det[I_{n_R} + \frac{1}{\sigma^2{}_N} \sum_{i=1}^{n_T} p_i H(i) H^h(i)]$$

$$= \{1 + \sum_{i_1=1}^{n_T} \frac{p_{i_1}}{\sigma^2{}_N} \det[H(i_1)^h H(i_1)]$$

$$+ \sum_{i_1=1}^{n_T} \sum_{i_2>i_1}^{n_T} \frac{p_{i_1}}{\sigma^2{}_N} \frac{p_{i_2}}{\sigma^2{}_N} \det[H^h(i_1,i_2) H(i_1,i_2)]$$

$$+ \sum_{i_1=1}^{n_T} \sum_{i_2>i_1}^{n_T} \sum_{i_3>i_2}^{n_T} \frac{p_{i_1}}{\sigma^2{}_N} \frac{p_{i_2}}{\sigma^2{}_N} \frac{p_{i_3}}{\sigma^2{}_N} \det[H^h(i_1,i_2,i_3) H(i_1,i_2,i_3)] + \ldots$$

$$+ \sum_{i_1=1}^{n_T} \sum_{i_1>i_2}^{n_T} \cdots \sum_{i_{n_T-2}>i_{n_T-2}}^{n_T} \frac{p_{i_1}}{\sigma^2{}_N} \frac{p_{i_2}}{\sigma^2{}_N} \cdots \frac{p_{n_T-1}}{\sigma^2{}_N} \det[H^h(i_1,i_2,\ldots,i_{n_T-1}) H(i_1,i_2,\ldots,i_{n_T-1})]$$

$$+ \sum_{i_1=1}^{n_T} \sum_{i_2>i_2}^{n_T} \cdots \sum_{i_{n_T-1}>i_{n_T-2}}^{n_T} \sum_{i_{n_T}>i_{n_T-1}}^{n_T} \frac{p_{i_1}}{\sigma_N{}^2} \frac{p_{i_2}}{\sigma_N{}^2} \cdots \frac{p_{n_T-1}}{\sigma_N{}^2} \frac{p_{n_T}}{\sigma_N{}^2} \det[H^h(i_1,i_2,\ldots,i_n) H(i_1,i_2,\ldots,i_{n_T})]\}$$

**6.** Procédé de radiocommunication comprenant les étapes consistant à :

(a) dans un émetteur (10), allouer une puissance de transmission à chacun des signaux de bande de base d'une pluralité de $n_T$ premières antennes émettrices, qui contiennent un signal d'informations donné depuis l'extérieur, en utilisant des informations de retour récupérées d'un signal de retour, moduler les signaux de bande de base avec la puissance de transmission allouée, convertir les signaux de bande de base modulés en signaux RF, et transmettre les signaux RF en utilisant la pluralité $n_T$ de premières antennes émettrices ; et
(b) dans un récepteur (20) recevoir les signaux RF sur une pluralité $n_R$ de secondes antennes réceptrices, estimer la réponse de canal subie pendant la transmission des signaux RF, récupérer le signal d'informations des signaux RF en utilisant la réponse de canal estimée, et transmettre le signal de retour contenant des informations concernant la puissance de transmission à allouer, calculée en utilisant la réponse de canal estimée, à l'émetteur par radio ; et

dans lequel la quantité de puissance de transmission à allouer à chacune des premières antennes émettrices est calculée dans le récepteur (20) en utilisant la réponse de canal estimée ;
**caractérisé en ce que**
le signal de retour n'inclut que la puissance de transmission à allouer aux premières antennes émettrices (48) sous forme de ($n_T$-1) nombres réels ; l'étape (a) comprenant les sous-étapes consistant à :

(a1) déterminer (100) si le signal d'informations est un symbole pilote ;
(a2) vérifier (102) la présence des informations de retour s'il est déterminé que le signal d'informations n'est pas le symbole pilote ;
(a3) récupérer (104) les informations de retour du signal de retour reçu s'il est déterminé que les informations de retour sont présentes ;

(a4) allouer (100) la puissance de transmission aux signaux de bande de base en utilisant les informations de retour récupérées ;

(a5) moduler (108) les signaux de bande de base avec la puissance de transmission allouée par un procédé de modulation prédéterminé ; et

(a6) convertir (110) les signaux de bande de base convertis en les signaux RF, et transmettre les signaux RF au récepteur.

**7.** Procédé de radiocommunication selon la revendication 6, dans lequel l'étape (a) comprend en outre la sous-étape (a7) consistant à allouer de façon égale la puissance de transmission aux signaux de bande de base correspondant au symbole pilote si le signal d'informations est le symbole pilote, convertir les signaux de bande de base et revenir à la sous-étape (a5).

**8.** Procédé de radiocommunication selon la revendication 7, dans lequel pendant la sous-étape (a2), la présence des informations de retour est vérifiée de façon répétée.

**9.** Procédé de radiocommunication selon la revendication 7, dans lequel l'étape (a) comprend en outre la sous-étape (a8) consistant à allouer de façon égale la puissance de transmission aux signaux de bande de base s'il est déterminé que les informations de retour ne sont pas présentes dans la sous-étape (a2), et revenir à la sous-étape (a5).

**10.** Procédé de radiocommunication selon la revendication 6, dans lequel l'étape (b) comprend les sous-étapes consistant à :

(b1) recevoir (120) les signaux RF transmis à l'étape (a) ;

(b2) convertir (122) les signaux RF reçus à la sous-étape (b1) en les signaux de bande de base et traiter les signaux de bande de base ;

(b3) déterminer (124) si les signaux de bande de base traités à la sous-étape (b2) concernent le symbole pilote ;

(b4) estimer (126) la réponse de canal à partir des signaux de bande de base traités qui concernent le symbole pilote si les signaux de bande de base traités à la sous-étape (b2) concernent le symbole pilote ;

(b5) calculer (128) la puissance de transmission à allouer aux signaux de bande de base, en utilisant la réponse de canal estimée ;

(b6) moduler la puissance de transmission calculée, convertir la puissance de transmission modulée en signaux RF, et transmettre (130) les signaux RF en tant que les signaux de retour à l'émetteur ; et

(b7) récupérer (132) le signal d'informations des signaux de bande de base traités à la sous-étape (b2) s'il est déterminé que les signaux de bande de base traités à la sous-étape (b2) ne concernent pas le symbole pilote, en utilisant la réponse de canal estimée.

FIG. 1

# FIG. 2

```
┌─────────────┐
│    START    │
└─────────────┘
        │
        ▼
┌──────────────────────────────────────────────┐
│ ALLOCATE TRANSMISSION POWER OF BASE-BAND      │
│ SIGNALS USING FEEDBACK SIGNAL, CONVERT        │──90
│ BASE-BAND SIGNALS WITH ALLOCATED              │
│ TRANSMISSION POWER, AND TRANSMIT THE SAME     │
└──────────────────────────────────────────────┘
        │
        ▼
┌──────────────────────────────────────────────┐
│ ESTIMATE CHANNEL RESPONSE, RECOVER            │
│ INFORMATION SIGNAL USING ESTIMATED CHANNEL    │
│ RESPONSE, AND TRANSMIT FEEDBACK SIGNAL        │──92
│ CONTAINING INFORMATION OF TRANSMISSION        │
│ POWER TO BE ALLOCATED AND CALCULATED          │
│ USING ESTIMATED CHANNEL RESPONSE              │
└──────────────────────────────────────────────┘
        │
        ▼
┌─────────────┐
│     END     │
└─────────────┘
```

# FIG. 3

```
                    ┌─────────────┐
                    │    START    │
                    └─────────────┘
                           │                              90
                           ▼                            ↙
YES          ◇────────────────────────◇  ─100
   ┌─────────         IS
   │          INFORMATION SIGNAL
   │              FOR PILOT
   │               SYMBOL?
   │         ◇────────────────────────◇
   │                   │ NO
   │                   ▼                      ─102
   │         ◇────────────────────────◇           NO
   │                  IS                    ──────────┐
   │          FEEDBACK SIGNAL                         │
   │              PRESENT?                            │
   │         ◇────────────────────────◇              │
   │                   │ YES                          │
   │                   ▼                              │
   │    ┌──────────────────────────────┐  ─104       │
   │    │   RECOVER FEEDBACK SIGNAL     │             │
   │    └──────────────────────────────┘             │
   │                   │                              │
   └───────────────────┼──────────────────────────────┘
                       ▼
        ┌──────────────────────────────┐
        │ ALLOCATE TRANSMISSION POWER OF │  ─106
        │      BASE-BAND SIGNALS         │
        └──────────────────────────────┘
                       │
                       ▼
        ┌──────────────────────────────┐
        │ MODULATE BASE-BAND SIGNALS WITH│  ─108
        │ ALLOCATED TRANSMISSION POWER   │
        └──────────────────────────────┘
                       │
                       ▼
        ┌──────────────────────────────┐
        │  CONVERT MODULATED BASE-BAND   │  ─110
        │  SIGNALS INTO RF SIGNALS AND   │
        │       TRANSMIT THE SAME        │
        └──────────────────────────────┘
                       │
                       ▼
                ┌─────────────┐
                │     END     │
                └─────────────┘
```

# FIG. 4

92

```
            ┌─────────────┐
            │    START    │
            └─────────────┘
                   │
                   ▼
      ┌───────────────────────────┐
      │    RECEIVE RF SIGNALS      │──120
      └───────────────────────────┘
                   │
                   ▼
      ┌───────────────────────────┐
      │  CONVERT RF SIGNALS INTO   │
      │  BASE-BAND SIGNALS AND     │──122
      │  SIGNAL-PROCESS THE SAME   │
      └───────────────────────────┘
                   │
                   ▼
              ╱╲  124
            ╱    ╲
          ╱  ARE   ╲
        ╱ SIGNAL-    ╲
       ╱ PROCESSED    ╲        NO
      ╱ BASE-BAND SIGNAL╲──────────────────┐
       ╲  FOR  PILOT    ╱                   │
        ╲  SYMBOLS?    ╱                    │
          ╲          ╱                      │
            ╲      ╱                        │
              ╲  ╱                          │
               │ YES                        │
               ▼                            │
   ┌───────────────────────────┐           │
   │  ESTIMATE CHANNEL RESPONSE │──126      │
   └───────────────────────────┘           │
               │                            │
               ▼                            │
   ┌───────────────────────────┐           │
   │  CALCULATE TRANSMISSION    │──128      │
   │  POWER TO BE ALLOCATED     │           │
   └───────────────────────────┘        132 │
               │                            ▼
               ▼              ┌───────────────────────┐
   ┌───────────────────────┐  │  RECOVER INFORMATION  │
   │ TRANSMIT FEEDBACK SIGNAL│──130│       SIGNAL        │
   └───────────────────────┘  └───────────────────────┘
               │                        │
               ▼◄───────────────────────┘
            ┌─────────┐
            │   END   │
            └─────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0072464 A
- EP 973283 A
- EP 1207645 A
- US 6192256 B